(19) Europäisches Patentamt
European Patent Office
Office européen des brevets

(11) **EP 2 285 056 B1**

(12) **EUROPEAN PATENT SPECIFICATION**

(45) Date of publication and mention
of the grant of the patent:
**04.01.2017 Bulletin 2017/01**

(51) Int Cl.:
***H04L 25/06*** *(2006.01)*    ***H04L 27/06*** *(2006.01)*

(21) Application number: **09745858.2**

(86) International application number:
**PCT/ES2009/000226**

(22) Date of filing: **27.04.2009**

(87) International publication number:
**WO 2009/138532 (19.11.2009 Gazette 2009/47)**

(54) **LOW-CONSUMPTION DEMODULATOR**

DEMODULATOR MIT GERINGEM VERBRAUCH

DÉMODULATEUR BASSE CONSOMMATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.05.2008 ES 200801393**
**14.05.2008 ES 200801394**

(43) Date of publication of application:
**16.02.2011 Bulletin 2011/07**

(73) Proprietor: **Farsens, S.L.**
**20009 San Sebastián, Guipuzcoa (ES)**

(72) Inventors:
• **VAZ SERRANO, Alexander**
**E-20010 San Sebastián (Guipuzcoa) (ES)**
• **BERENGUER PEREZ, Roc**
**E-20018 San Sebastián (Guipuzcoa) (ES)**
• **PARDO SÁNCHEZ, Daniel**
**E-20006 San Sebastián (Guipuzcoa) (ES)**
• **MENDIZABAL SAMPER, Jaizki**
**E-20018 San Sebastián (Guipuzcoa) (ES)**
• **ZALBIDE AGIRREZABALAGA, Ibon**
**E-20011 San Sebastián (Guipuzcoa) (ES)**
• **MAYORDOMO LASTRA, Iker**
**E-48950 Erandio (Bizkaia) (ES)**
• **GUTIERREZ GARCÍA, Iñigo**
**E-20018 San Sebastián (Guipuzcoa) (ES)**
• **GARCÍA-ALONSO MONTOYA, Andrés**
**E-20018 San Sebastián (Guipuzcoa) (ES)**

(74) Representative: **ABG Patentes, S.L.**
**Avenida de Burgos, 16D**
**Edificio Euromor**
**28036 Madrid (ES)**

(56) References cited:
**CN-A- 1 980 204    JP-A- 2006 117 834**
**US-A- 5 677 601    US-A1- 2006 115 018**
**US-B1- 6 873 205    US-B2- 6 891 900**

## Description

<u>Field of the Art</u>

The present invention relates to demodulator circuits, proposing a demodulator which, due to its low power consumption can be advantageously used in wireless devices.

<u>State of the Art</u>

A demodulator is a device that is responsible for decrypting the message that is received in transceivers.

The demodulation of the incoming signal can be of different types, depending on the modulation with which said signal is received. Depending on this classification, there are demodulators with different designations: ASK, BPSK, QPSK, PWM, etc.

There are currently demodulators on the market that are based on amplitude modulation, such as demodulators of the ASK or PWM types.

Within the variety of amplitude demodulators ASK type demodulators stand out (such as a passive RFID tag), which have the drawback that their consumption is excessively high for certain applications.

It has been observed that the power consumption of integrated circuits is a critical design factor for certain applications, such as wireless applications.

This fact involves a serious drawback due to the shortening of the battery life or of the smaller communication distances reached by these devices.

The international application WO 2006 117834 A discloses a semiconductor integrated circuit having a demodulation circuit provided with a detection circuit to detect an amplitude-modulated voltage signal with a predetermined sensitivity. The United States patent US 689190082 B2 discloses a demodulating circuit includes a differentiating circuit that outputs a differentiated signal indicating voltage changes at rising and falling edges of a received pulse signal, and a hysteresis comparator that compares the differentiated signal with upper and lower threshold voltages, thereby generating a demodulated logic-level signal.

Based on the foregoing, there is a need for low power consumption demodulators so that they can be used in wireless applications.

<u>Object of the Invention</u>

According to the following invention, and ASK type low power consumption demodulator is proposed, which demodulator is robust against the noise coming from the input signal, as well as against process variations with a high dynamic range in the input power.

The demodulator object of the invention consists of a circuit consisting of: a Greinacher topology type of differential voltage multiplier; a voltage limiter at the output of the multiplier; a current source; a low-pass filter, which is made up of a pair of diodes and a pair of capacitors; and a comparator.

The input of the circuit can be both a differential input, and a single-ended type input. The manner of obtaining the latter type is by eliminating the symmetry of its architecture and grounding the axis of symmetry.

The voltage multiplier is an envelope detector circuit which is able to raise the voltage of the input signal to a certain level so that its comparison can be carried out. The most widely used topology is modified Dickson topology (if the circuit is single-ended) or Greinacher topology (if the circuit is a differential input circuit).

The voltage multiplier must have enough stages to ensure a minimum voltage at its output. In addition, the voltage multiplier cannot have a very capacitive impedance, because the amplitude modulation must be detected and a very capacitive impedance would filter the amplitude modulation, because the time constant at the output of the multiplier is greater ($\tau_1=RC$) and therefore the value $I_{DC}$ of the current source must be greater in order to discharge the power stored in said capacitor. This involves greater consumption and a reduction of the dynamic range, which is not advisable. Therefore, there is a compromise between voltage that is desired to be reached at the output of the voltage multiplier and the consumption of the demodulator.

The existing drawbacks are based on the fact that when the input voltage of the circuit is large, the voltage existing at the output of the voltage multiplier can be so great that it may destroy the circuits which are later connected. It is necessary to include a voltage limiter in the functional assembly, to protect the latter connected circuits.

In addition, this limiter must not consume until a limit has been surpassed. Therefore, if the input power is very low, the limiter will not consume and the demodulator may correctly demodulate the signal, amplifying the dynamic range of the circuit. In summary, it is advisable to use a limiter with two states: state 1- null consumption; state 2- high consumption.

Since the circuit has a capacitive load, when the amplitude of the signal varies, the capacitor attenuates this variation. To that end, in order to detect this amplitude variation, it is necessary to place a current source before the detection. The current source has to consume the necessary minimum to ensure good modulation detection, without jeopardizing the consumption of the rest of the circuit.

Detection is achieved by comparing two signals: the first signal is the signal existing before filtering ($V_{IN+}$), and the other one is the signal resulting once the signal is filtered ($V_{REF+}$). A relative comparison is thus achieved at the power level existing at the input of the comparator; therefore, the dynamic range is amplified. Furthermore, this method makes the sensitivity to amplitude modulation very good, because it is an adjusted comparison between two relative signals.

Filtering is performed by means of two diodes and two capacitors. The diodes replace the resistors that are normally used in low-pass filters. These diodes have a very low resistance for the charge of the capacitors, which is desirable; and, in contrast, a very high resistance for its discharge, therefore the time constant is greater ($\tau_2 = RC$). A virtually invariable signal is thus achieved at a relative voltage level of the output signal of the voltage multiplier. In other words, if signal ($V_{IN+}$) abruptly varies, signal ($V_{REF+}$) remains virtually invariable. To that end, this latter signal is the one that is used as a reference in the comparator.

Furthermore, with the voltage drop in the diodes it must be ensured that the ripple existing at the output of the multiplier, especially in cases in which the input power is very high, does not affect demodulation.

The comparator is a simple circuit sensitive to the two signals ($V_{IN+}$) and ($V_{REF+}$). By adding a diode in the second stage, it is more robust against process dispersions, since the deviations are compensated between the different devices that determines the comparator (Transistors, diodes, ...). In order for the comparator to only consume at the necessary times, two inverters have been included at its power supply input, controlled by a signal (ASK_enable).

Description of the Drawings

Figure 1 depicts the general architecture of a demodulator circuit according to the present invention.

Figure 2 depicts the architecture of the comparator of the demodulator circuit.

Figure 3 shows the signals ($RF_{IN}$), ($V_{IN+}$) and ($V_{REF+}$) for two different input power levels, ($P_{IN1}$) being greater than ($P_{IN2}$).

Figure 4 shows a schematic of the voltage limiter of the demodulator circuit object of the invention.

Figure 5 depicts in a schematic block the voltage limiter of the previous figure according to a practical example of the invention, showing all the signals intervening in its operation.

Figure 6 depicts the architecture of the voltage limiter circuit.

Figure 7 shows the actual performance of the voltage limiter circuit, depicting a graph of the current consumption depending on the power supply voltage, where ($V_L$) is the maximum voltage allowed.

Detailed Description of the Invention

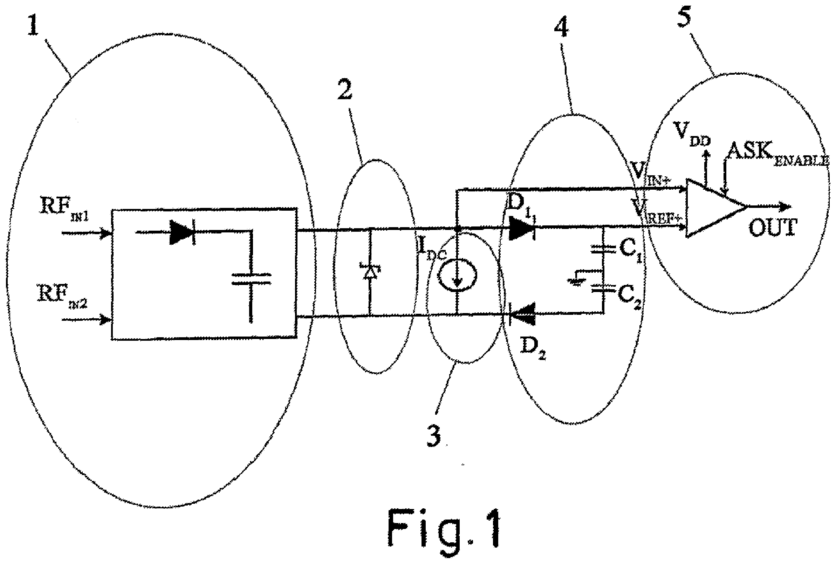

Figure 1 depicts the block diagram of the demodulator circuit object of the invention, in which the block (1) is a voltage multiplier, necessary for raising the voltage of the input signal, which is usually low, and to thus be able to detect it.

However, the voltage of the input signal can also have a high value, and in this case the voltage multiplier continues raising the input signal, even being able to reach a voltage level that may damage circuits that are later coupled thereto. A voltage limiter, which can be referred to as block (2), is arranged for this reason.

A current source, referred to as block (3), is included in parallel to the limiter. This current source is responsible for the signal ($V_{IN+}$) quickly varying when the signals ($RF_{IN1}$) and ($RF_{IN2}$) are amplitude modulated. The assembly ($D_1$-$D_2$ and $C_1$-$C_2$), referred to as block (4), performs the function of a low-pass filter.

Diodes have been implemented instead of resistors in order to force the current to circulate in a one-way circuit, thus achieving that the capacitors do not discharge and the signal ($V_{REF+}$) therefore being more stable.

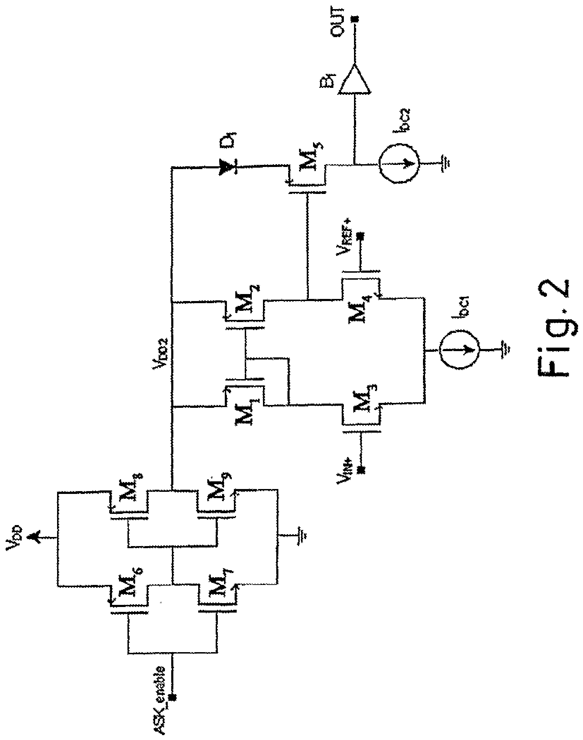

Finally, the signals ($V_{REF+}$) and ($V_{IN+}$) are compared in a comparator, referred to as block (5), which is depicted in an enlarged manner in Figure 2.

The transistors ($M_6$-$M_9$) in said comparator work as two cascade inverters enabling the comparator so that it is activated only when the signal (ASK_enable) is activated. The reason is so that the ASK circuit consumes only when needed.

The transistors ($M_1$-$M_4$) form a differential amplifier with an active load, such that they work as a comparator. Since the current ($I_{DC1}$) is a DC current, when the voltage ($V_{REF+}$) is greater than ($V_{IN+}$), more current goes through the transistors ($M_2$) and ($M_4$). The voltage at the gate of the transistor ($M_5$) is thus high enough to activate the second branch of the amplifier made up of the diode ($D_1$), the transistor ($M_5$) and the current source ($I_{DC2}$). The inclusion of the diode ($D_1$) makes the comparator robust against manufacturing process dispersions. This is due to the fact that these dispersions are compensated between the different transistors and diodes. In addition, by including a diode between ($V_{DD2}$) and the transistor ($M_5$), the voltage at the gate of said transistor must be somewhat lower to be activated and therefore, not depend so much on the variations of the threshold voltage of the transistors. Finally, the buffer ($B_1$) is included to obtain at the output (OUT) a clean demodulated signal so that the digital part detects it without problems.

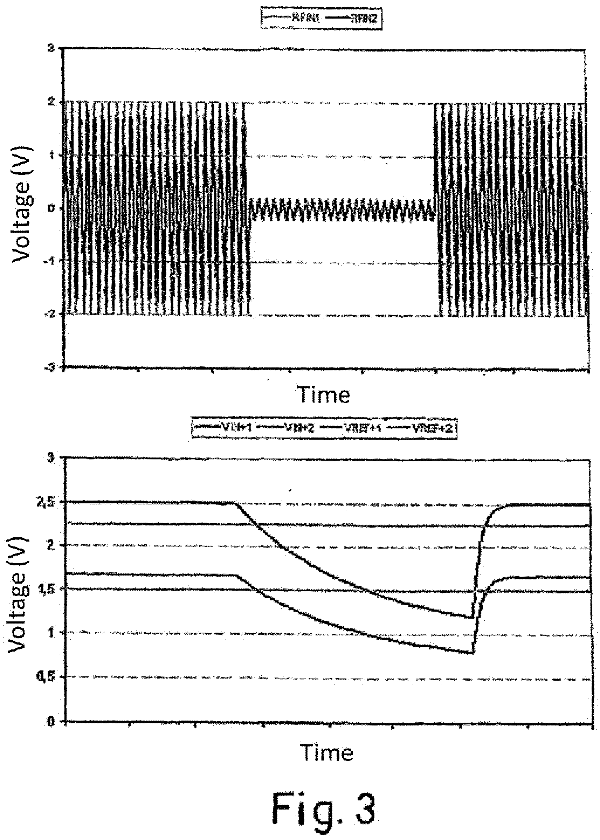

Figure 3 shows the different signals of the circuit for two different input power levels. The first graph shows the modulated radiofrequency signal ($RF_{IN}$). This signal is converted at the output of the multiplier (1) into signal ($V_{IN+}$), which is the envelope of the radio frequency signal, though with a slight delay due to the capacitive impedance of the multiplier (1). Upon filtering this signal, signal ($V_{REF+}$) is obtained, which signal, as shown in the figure, remains virtually constant although the signal ($V_{IN+}$) decreases. These two signals, ($V_{IN+}$) and ($V_{REF+}$, are compared such that when ($V_{IN+}$) is less than ($V_{REF+}$), the comparator (5) activates its output signal.

The signals for two different input power levels are shown in the same graph. It shows how even though the input powers are different, the operation is the same, because the two signals ($V_{IN+}$) and ($V_{REF+}$), which are relative at the input power level, are compared.

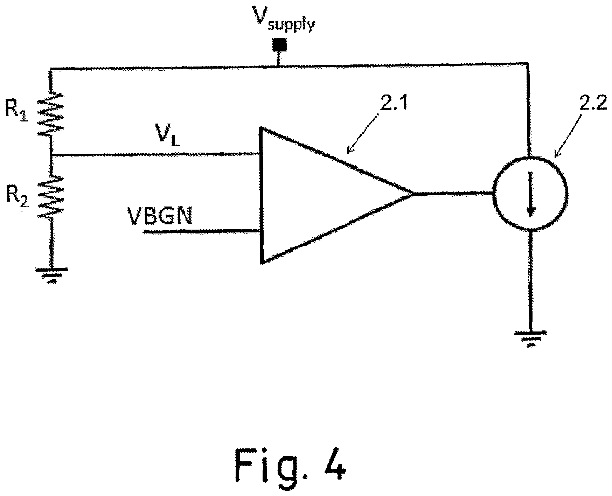

Figure 4 shows an scheme of the limiter circuit block (2), so that the limiter circuit is formed by a voltage divisor ($R_1$, $R_2$) which provides a voltage ($V_L$) proportional to the signal ($V_{SUPPLY}$) to be limited, which is compared to the reference voltage (VBGN) by a block (2.1), so that in function of such comparison the limiter switches on and the excess of current coming from the difference between the signals ($V_{SUPPLY}$) and ($V_L$) is dissipated by the block (2.2).

The block (2.1) can be implemented by any kind of comparator, such as the block (2.2) can be any type of current source too.

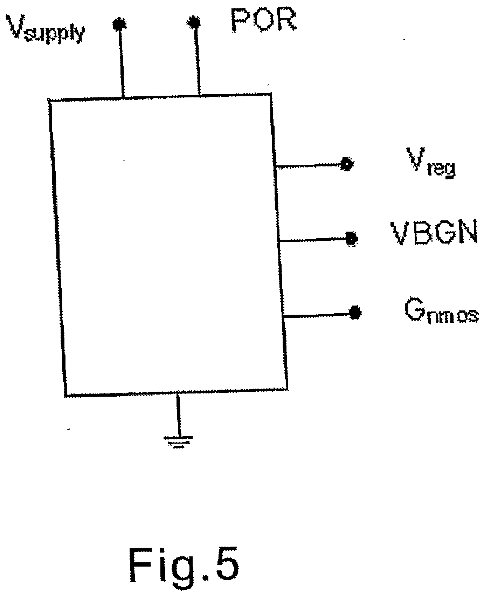

Figure 5 shows are presentation of the limiter circuit in Figure 4, in which all the signals involved in the operation of the voltage limiter are presented, which are the following:

- $V_{SUPPLY}$: It is the power supply of the circuit. It is also the signal which is to be limited.

- POR: This is a signal following ($V_{SUPPLY}$) once it has reached a certain voltage value. The signal (POR) is needed in order to prevent an unnecessary consumption of the limiting part of the circuit when it is not operating as such. It can be compared to an enable signal allowing the passage of the signal ($V_{SUPPLY}$) once the latter has reached a certain voltage value. It is therefore achieved that the rest of the circuits of the system in which this limiter is implemented do not consume until the power supply voltage does not have a certain minimum value.

- VBGN: It is a voltage signal from a voltage reference. It is a stable and unvarying voltage (to process, temperature or power supply voltage dispersions), which is used as a reference in the comparator implemented in the circuit. This signal is activated after the signal (POR) has been activated.

- Gnmos: Is a signal from an external current source having its mirror branch in a transistor ($M_5$), which acts as a current source for the circuit limiter and specifically for the comparator.

- Vreg: It is a regulated voltage signal which can come, for example, from a voltage regulator circuit. In this case it is a higher voltage than (VBGN) and also appears after the signal (POR) does.

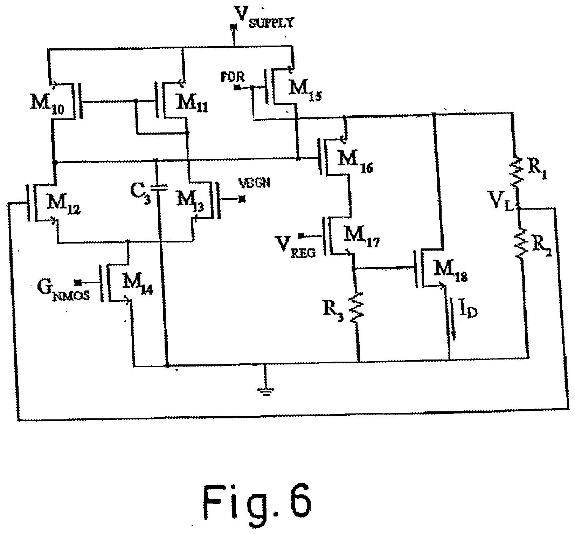

Figure 6 shows the architecture of the voltage limiter circuit. The operation thereof is rather simple since it is based on a simple comparator formed by transistors ($M_{10}$-$M_{13}$). Two signals are compared therein: one of them is a reference voltage (VBGN) and the other is a voltage ($V_L$) proportional to the signal to be limited ($V_{SUPPLY}$). While the latter is kept below the reference signal (VBGN), the limiter does not act. However when the reference signal (VBGN) is less than the output signal ($V_{SUPPLY}$), the limiter is activated, preventing the latter from increasing above the maximum voltage allowed ($V_L$).

The way of fixing the maximum allowed voltage ($V_L$) is sizing the voltage divider forming the resistors ($R_1$) and ($R_2$). Once ($V_L$) is determined, the values of the resistors are calculated according to the following formula:

$$\frac{R_2}{R_1 + R_2} = \frac{VBGN}{V_L}$$

A capacitor ($C_3$) has been added at the output of the comparator. It acts as a low-pass filter. It is in charge of filtering a possible ripple which would be transmitted directly to the output signal of the comparator, and therefore to the limited signal itself. The stability of the feedback loop is thus assured and the possible oscillation is prevented.

In order to prevent a very large consumption peak from occurring when the voltage limiter starts to operate, due to the load of the capacitor ($C_3$), the p-MOS transistor ($M_{15}$) has been added. This transistor makes the capacitor ($C_3$) be loaded from the beginning, even before the voltage limiter starts to operate as such. The transistor ($M_{15}$) allows the passage of the supply to the capacitor ($C_3$) directly until the signal (POR) appears, at which time the transistor ($M_{15}$) is cut off and from then on the limiter can operate as such once the necessary conditions are provided.

In addition, once the signal (POR) has been activated, the transistors ($M_{16}$) and ($M_{17}$) are activated. This branch in turn activates the transistor ($M_{18}$), which will be in charge of absorbing all the extra current ($I_D$) so that it does not affect the rest of the circuits which it protects. In fact, the sizing of the transistor ($M_{18}$) is key since it has to be large enough as to be able to support the currents which it has to absorb without being damaged.

The gate of the transistor ($M_{17}$) is connected to ($V_{REG}$) for different reasons. One of them is to save power. This signal is later in time in relation to the appearance of the signal (POR), thus that branch will not consume until ($V_{REG}$) appears. Furthermore, its voltage is higher than (VBGN), thus preventing that the limiter stops assuming current when it is very large. This could occur if the source voltage was made very large and would be able to cut off the transistor. This could ruin the operation of the circuit. Therefore, by using ($V_{REG}$), the maximum current will be greater than if a smaller voltage was used in the gate of the transistor ($M_{17}$).

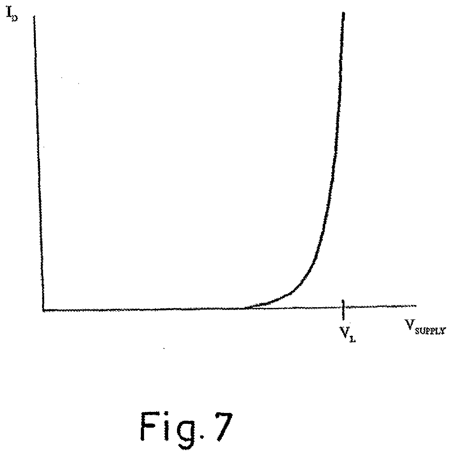

Figure 7 shows the performance of the circuit limiter. When the limiter is deactivated, the consumption thereof is nil. Once it is activated, it starts to consume current in order to prevent the signal from increasing voltage. The maximum voltage which ($V_{SUPPLY}$) can reach is determined (limited) by ($V_L$), as shown in the graph.

## Claims

1. An ASK demodulator for wireless devices, the ASK demodulator consisting of a circuit including a voltage multiplier (1) to raise the input voltage of a signal, a voltage limiter (2) to prevent the raising of the voltage from surpassing a certain level, a current source (3) for conditioning the signal involved, a low-pass filter (4) to stabilize the signal, and a comparator (5) providing the output signal depending on two previous signals of the low-pass filter (4) and the current source (3), one of which signal $V_{REF+}$ from the low-pass filter (4) is used as a reference to adapt the other signal $V_{IN+}$ from the stage of the current source (3),
   wherein the comparator (5) consists of two stages, one of them formed by transistors $M_6$-$M_9$ determining two cascade inverters and the other one formed by transistors $M_1$-$M_4$ forming an amplifier which is complemented with a diode $D_1$ and
   wherein the voltage limiter circuit (2) consists of a comparator block formed by transistors $M_{10}$-$M_{13}$, through which a reference voltage $V_{BGN}$ is compared to a voltage $V_L$ provided by a voltage divisor $R_1$, $R_2$ calculated in order to avoid the voltage $V_L$ exceed a determined maximum value, the voltage $V_L$ being proportional to a supply voltage signal $V_{SUPPLY}$ which is limited, applying the difference between the signals $V_{BGN}$ and $V_{SUPPLY}$, when the last one is higher than the first one, to a group of transistors $M_{16}$-$M_{18}$ that absorbs, through the transistor $M_{18}$, the current corresponding to the difference between the signals $V_{BGN}$ and $V_{SUPPLY}$, establishing the current of that difference to the group of transistors $M_{16}$-$M_{18}$ through a switch $M_{15}$ which is just activated when $V_{SUPPL}$y is higher than $V_{BGN}$;
   and wherein the intermediate transistor $M_{17}$ of the transistors $M_{16}$-$M_{18}$ self-supplies with a signal $V_{REG}$ regulated in voltage from an external source, higher than the voltage $V_{BGN}$ of reference.

2. The ASK demodulator according to claim 1, **characterized in that** the low-pass filter (4) consists of two diodes $D_1$-$D_2$ and two capacitors $C_1$-$C_2$.

3. The ASK demodulator, according to claim 1, **characterized in that** the comparator block $M_{10}$-$M_{13}$ is

supplied by a signal $G_{NMOS}$ from an external current source, going to the output of that comparator block $M_{10}$-$M_{13}$ a capacitor $C_3$ which acts as a low pass filter.

## Patentansprüche

1. ASK-Demodulator für drahtlose Vorrichtungen, wobei der ASK-Demodulator besteht aus: einem Schaltkreis, der einen Spannungsmultiplikator (1) umfasst, um die Eingangsspannung eines Signals anzuheben, einen Spannungsbegrenzer (2), der verhindert, dass die Spannung einen bestimmten Pegel überschreitet, eine Stromquelle (3) zur Aufbereitung des beteiligten Signals, ein Tiefpassfilter (4), um das Signal zu stabilisieren, und einen Komparator (5), der das Ausgangssignal in Abhängigkeit von zwei vorherigen Signalen des Tiefpassfilters (4) und der Stromquelle (3) bereitstellt, wobei eines der Signale $V_{REF}$, aus dem Tiefpassfilter (4) als Bezug verwendet wird, um das andere Signal $V_{IN+}$ aus der Stufe der aktuellen Quelle (3) anzupassen,
   wobei der Komparator (5) aus zwei Stufen besteht, von denen eine aus Transistoren $M_6$-$M_9$ besteht, die zwei Kaskadenwechselrichter bestimmt, und die andere aus Transistoren $M_1$-$M_4$ besteht, die einen Verstärker bilden, der zu einer Diode $D_1$ komplementär ist, und
   wobei der Spannungsbegrenzungsschaltkreis (2) aus einem Komparatorblock besteht, der aus Transistoren $M_{10}$-$M_{13}$ ausgebildet ist, durch die eine Bezugsspannung $V_{BGN}$ mit einer Spannung $V_L$ verglichen wird, die von einem Spannungsteiler $R_1$, $R_2$ zugeführt und berechnet wird, um zu verhindern, dass die Spannung $V_L$ einen bestimmten Maximalwert überschreitet, wobei die Spannung $V_L$ proportional zu einem Versorgungsspannungssignal $V_{SUPPLY}$ ist, das begrenzt ist,
   Anwenden der Differenz zwischen den Signalen $V_{BGN}$ und $V_{SUPPLY}$, wenn das letzte höher ist als das erste, auf eine Gruppe von Transistoren $M_{16}$-$M_{18}$, die durch den Transistor $M_{18}$ den Strom entsprechend der Differenz zwischen den Signalen $V_{BGN}$ und $V_{SUPLY}$ absorbiert,
   Einrichten des Stromes dieser Differenz auf die Gruppe von Transistoren $M_{16}$-$M_{18}$ durch einen Schalter $M_{15}$, der immer dann aktiviert wird, wenn $V_{SUPPLY}$ höher ist als $V_{BGN}$;
   und wobei der Zwischentransistor $M_{17}$ der Transistoren $M_{16}$-$M_{18}$ sich selbst mit einem Signal $V_{REG}$ versorgt, das von einer externen Quelle in seiner Spannung geregelt wird, die höher ist als die Spannung $V_{BGN}$ des Bezugs.

2. ASK-Demodulator nach Anspruch 1, **dadurch ge-**

**kennzeichnet, dass** das Tiefpassfilter (4) aus zwei Dioden $D_1$-$D_2$ und zwei Kondensatoren $C_1$-$C_2$ besteht.

3.  ASK-Demodulator nach Anspruch 1, **dadurch gekennzeichnet,** das der Komparatorblock $M_{10}$-$M_{13}$ mit einem Signal $G_{NMOS}$ von einer externen Stromquelle versorgt wird, wobei zu dem Ausgang dieses Komparatorblocks $M_{10}$-$M_{13}$ ein Kondensator $C_3$ führt, der als Tiefpassfilter dient.

**térisé en ce que** le filtre passe-bas (4) se compose de deux diodes $D_1$-$D_2$ et de deux condensateurs $C_1$-$C_2$.

3.  Démodulateur ASK selon la revendication 1, **caractérisé en ce que** le bloc de comparateur $M_{10}$-$M_{13}$ est alimenté par un signal $G_{NMOS}$ qui provient d'une source de courant externe, étant relié à la sortie de ce bloc de comparateur $M_{10}$-$M_{13}$ un condensateur $C_3$ qui sert de filtre passe-bas.

**Revendications**

1.  Démodulateur ASK pour dispositifs sans fil, le démodulateur ASK se composant d'un circuit comprenant un multiplicateur de tension (1) destiné à augmenter la tension d'entrée d'un signal, d'un limiteur de tension (2) destiné à empêcher l'augmentation de la tension de dépasser un certain niveau, d'une source de courant (3) destinée à conditionner le signal impliqué, d'un filtre passe-bas (4) destiné à stabiliser le signal, et d'un comparateur (5) qui fournit le signal de sortie selon deux signaux précédents du filtre passe-bas (4) et de la source de courant (3), dont un signal $V_{REF+}$ qui provient du filtre passe-bas (4) est utilisé comme référence afin d'adapter l'autre signal $V_{IN+}$ qui provient de l'étage de la source de courant (3),
dans lequel le comparateur (5) se compose de deux étages, l'un d'entre eux étant formé par des transistors $M_6$-$M_9$ qui déterminent deux inverseurs en cascade et l'autre étant formé par des transistors $M_1$-$M_4$ qui forment un amplificateur qui est complété par une diode $D_1$, et
dans lequel le circuit de limitation de tension (2) se compose d'un bloc de comparateur formé par des transistors $M_{10}$-$M_{13}$, grâce auquel une tension de référence $V_{BGN}$ est comparée avec une tension $V_L$ fournie par un séparateur de tension $R_1$, $R_2$ calculée afin d'empêcher la tension $V_L$ de dépasser une valeur maximale déterminée, la tension $V_L$ étant proportionnelle à un signal de tension d'alimentation $V_{SUPPLY}$ qui est limité, qui applique la différence entre les signaux $V_{BGN}$ et $V_{SUPPLY}$, lorsque le dernier est supérieur au premier, à un groupe de transistors $M_{16}$-$M_{18}$ qui absorbe, par le transistor $M_{18}$, le courant qui correspond à la différence entre les signaux $V_{BGN}$ et $V_{SUPPLY}$, qui fournit le courant de cette différence au groupe de transistors $M_{16}$-$M_{18}$ à l'aide d'un commutateur $M_{15}$ qui est juste activé lorsque $V_{SUPPLY}$ et supérieur à $V_{BGN}$ ;
et dans lequel le transistor intermédiaire $M_{17}$ des transistors $M_{16}$-$M_{18}$ est autoalimenté avec un signal $V_{REG}$ régulé en tension par une source externe, supérieur à la tension $V_{BGN}$.

2.  Démodulateur ASK selon la revendication 1, **carac-**

Fig. 1

Fig. 2

Fig. 3

Fig. 4

Fig.5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006117834 A

- US 689190082 B2